# EUROPÄISCHE PATENTSCHRIFT

(11) **EP 3 070 552 B1**
(45) Veröffentlichungstag und Bekanntmachung des Hinweises auf die Patenterteilung: **13.10.2021**
(21) Anmeldenummer: 15159555.0
(22) Anmeldetag: 18.03.2015
(51) Int. Cl.: G05B 19/042

(54) **VERKNÜPFUNG EINES AUTOMATISIERUNSGERÄTES MIT EINEM DATENVERARBEITUNGSSYSTEM**
LINKING AN AUTOMATION DEVICE TO A DATA PROCESSING SYSTEM
CONNEXION D'UN APPAREIL D'AUTOMATISATION À UN SYSTÈME DE TRAITEMENT DE DONNÉES

(43) Veröffentlichungstag der Anmeldung: 21.09.2016
(73) Patentinhaber: Siemens Aktiengesellschaft, 80333 München (DE)
(72) Erfinder: Wolf, Edgar, 71083 Herrenberg (DE)

(56) Entgegenhaltungen:
- DE-A1- 19 834 456
- US-A1- 2012 047 435
- US-A1- 2012 117 380
- None

## Beschreibung

Die Erfindung betrifft ein Verfahren zur Verknüpfung eines Automatisierungsgerätes mit einem Datenverarbeitungssystem und ein Datenverarbeitungssystem zur Durchführung des Verfahrens.

Automatisierungsgeräte und auch Geräte des alltäglichen Gebrauches werden zunehmend innoviert und eingesetzt, um Daten für elektronische Service- oder Mehrwertdienstleistungen zu sammeln. Dabei entstehen folgende Anforderungen:
- Ein Gerät muss identifiziert werden, um dem Gerät von ihm gesendete Daten zuordnen zu können, denn in der Regel können Daten nur dann verwendet werden, wenn die Herkunft der Daten geklärt ist.
- Ein Gerät muss authentifiziert werden, um beispielsweise zu entscheiden, ob von dem Gerät gesendete Daten auch gespeichert werden sollen, denn eine Datenspeicherung soll in der Regel nur für Geräte erfolgen, für die auch ein kommerzielles Interesse in dieser Hinsicht besteht.
- Ein Gerät muss autorisiert werden, um Zugriff auf bestimmte Daten oder Informationen zu bekommen.
- Ein Missbrauch eines Gerätes oder eine Gefährdung eines Systems durch ein Gerät muss ausgeschlossen werden.

Beim Anbinden eines Automatisierungsgerätes an ein Datenverarbeitungssystem wird das Automatisierungsgerät in dem Datenverarbeitungssystem in der Regel durch ein virtuelles Gerät dargestellt. Dabei muss eine Verbindung oder eine Verknüpfung zwischen dem realen Gerät und dem virtuellen Gerät hergestellt werden. Dies ist notwendig, um Daten, die das Automatisierungsgerät schickt, dem virtuellen Gerät zuordnen zu können. Oftmals wird in diesem Zusammenhang auch von so genannten "cyber-physischen Geräten" gesprochen.

Die Zuordnung der von dem Automatisierungsgerät eintreffenden Daten muss innerhalb des Datenverarbeitungssystems und dort innerhalb einer Struktur oder Hierarchie frei zugeordnet werden können. Ein dabei auftretendes Problem besteht darin, dass bei einem anonymen Verkauf eines Gerätes diese Daten vom Kunden und Käufer des Gerätes erfasst und im Datenverarbeitungssystem an der richtigen Stelle eingegeben werden müssen. Irrtümer können zu erheblichen Problemen und Fehlern bei den darauf abgestützten Prozessen, wie zum Beispiel Serviceprozessen, führen. Bei derartigen Prozessen an Fahrzeugen beispielsweise ist es erheblich, welche Bremse eine Wartung benötigt. Ist die Zuordnung, beispielsweise infolge einer Verwechslung einer Seriennummer oder MAC-Adresse (MAC = Media Acces Control) des Gerätes, falsch, kann dies unter Umständen beim Einsatz von elektronisch gestützten Wartungsprozessen zur Gefährdung von Fahrzeuginsassen führen. Außerdem sind gegebenenfalls in einem Gerät gespeicherte Merkmale oft nicht weltweit eindeutig oder müssen durch Kombination oder zusätzliche Einbringung von Merkmalen eindeutig gemacht werden, was einen Zusatzaufwand erfordert.

Bei bekannten Verfahren zur Verknüpfung eines Automatisierungsgerätes mit einem Datenverarbeitungssystem werden die eindeutigen Merkmale des Gerätes, z. B. eine Seriennummer oder MAC-Adresse des Automatisierungsgerätes (oder dessen Netzwerkadapters), verwendet, um eine Zuordnung des realen Gerätes zum virtuellen Gerät herzustellen. Hierzu werden diese Merkmale in dem Datenverarbeitungssystem hinterlegt und mit dessen Struktur verknüpft. Dadurch kann beim Eintreffen der Daten eine Zuordnung durchgeführt werden, wenn das Automatisierungsgerät dem Datenverarbeitungssystem die Merkmale mit den Daten übermittelt. Um dabei eine weltweit eindeutige Identifizierung vorzunehmen (zum Beispiel bei so genannten "Public Cloud-Systemen"), wird oft eine Kombination verschiedener Merkmale zur Kennzeichnung des Gerätes benötigt.

Bei anderen bekannten Verfahren wird die Einbringung eines Merkmals bei einem Inbetriebnahme-Prozess des realen Gerätes mit einem virtuellen Gerät dazu verwendet, die Verknüpfung mit dem Datenverarbeitungssystem herzustellen. Dieses Merkmal muss persistent auf bzw. in dem Gerät gespeichert werden oder sein und beim Verschicken der Daten durch das Gerät verwendet werden. Auf diese Weise ist eine Zuordnung der Daten zu dem Gerät beim Eintreffen der Information möglich.

Aus der US 2012/0047435 A1 ist ein Computersystem bekannt, welches die Konfiguration und die Verwaltung eines Beschallungssystems automatisiert, welches einen Prozessor und einen Speicher zur Erstellung einer Darstellung des Beschallungssystems für eine Veranstaltung auf einer grafischen Benutzeroberfläche einer Anzeige aufweist. Unter anderem lädt das System die Abstimmungsdaten in eine entsprechende Darstellung des digitalen Signalprozessors und/oder Verstärker auf Basis von Konfigurationen der zugehörigen Lautsprecher um eine virtuelle Konfiguration abzuschließen. Die Darstellungen der Geräte und Verbindungen können mit physischen Geräten des Beschallungssystems und den Abstimmungsdaten abgestimmt werden, welche zu physikalischen digitalen Signalprozessoren und/oder Verstärkern für ihre Konfiguration gesendet werden.

Der Erfindung liegt die Aufgabe zugrunde, ein verbessertes Verfahren zur Verknüpfung eines Automatisierungsgerätes mit einem Datenverarbeitungssystem und ein Datenverarbeitungssystem zur Durchführung des Verfahrens anzugeben.

Die Aufgabe wird erfindungsgemäß hinsichtlich des Verfahrens durch die Merkmale des Anspruchs 1 und hinsichtlich des Datenverarbeitungssystems durch die Merkmale des Anspruchs gelöst.

Vorteilhafte Ausgestaltungen der Erfindung sind Gegenstand der Unteransprüche.

Bei dem erfindungsgemäßen Verfahren zur Verknüpfung eines Automatisierungsgerätes mit einem Datenverarbeitungssystem wird in dem Datenverarbeitungssystem für das Automatisierungsgerät ein virtuelles Gerät angelegt und für das virtuelle Gerät eine Identifikationsnummer in dem Datenverarbeitungssystem erzeugt. Die dem virtuellen Gerät zugeordnete Identifikationsnummer wird dem Automatisierungsgerät zugeführt und in dem Automatisierungsgerät gespeichert. Die Identifikationsnummer wird anschließend zur Interaktion des Automatisierungsgerätes mit dem Datenverarbeitungssystem verwendet.

Erfindungsgemäß wird also kein in dem Automatisierungsgerät hinterlegtes Merkmal wie eine Seriennummer oder MAC-Adresse zur Kennzeichnung eines das Automatisierungsgerät in dem Datenverarbeitungssystem darstellenden virtuellen Gerätes verwendet, sondern es wird in dem Datenverarbeitungssystem eine Identifikationsnummer für das virtuelle Gerät erzeugt, die auf das reale Automatisierungsgerät übertragen und zu dessen Interaktion mit dem Datenverarbeitungssystem verwendet wird. Dadurch kann eine eindeutige Kennzeichnung des Automatisierungsgerätes erreicht werden, ohne sich auf in dem Gerät gespeicherte Merkmale wie eine Seriennummer oder MAC-Adresse, welche bei einer großen Anzahl von Geräten im Adressraum gegebenenfalls keine Eindeutigkeit mehr garantieren können, verlassen zu müssen.

Außerdem braucht dem Automatisierungsgerät kein Merkmal mehr in dessen Produktionsprozess eingeprägt und von dem Hersteller verwaltet werden, um das Automatisierungsgerät möglichst eindeutig zu kennzeichnen. Dadurch werden vorteilhaft die Kosten der Herstellung und Handhabung des Automatisierungsgerätes reduziert, da keine Verwaltung einer Geräteidentität durch den Gerätehersteller notwendig ist. Das ist insbesondere vorteilhaft, wenn es keinerlei Beziehung zwischen den Herstellern des Automatisierungsgerätes und des Datenverarbeitungssystems gibt.

Es ist vorgesehen, dass die dem virtuellen Gerät zugeordnete Identifikationsnummer dem Automatisierungsgerät mittels eines zur Konfiguration des Automatisierungsgerätes ausgebildeten Konfigurationswerkzeugs zugeführt wird, wobei die für das virtuelle Gerät erzeugte Identifikationsnummer von dem Konfigurationswerkzeug gespeichert und auf das Automatisierungsgerät übertragen wird. Dazu wird dem Konfigurationswerkzeug die dem virtuellen Gerät zugeordnete Identifikationsnummer beispielsweise über eine Netzwerkschnittstelle oder mittels eines Speichermediums oder über einen zwischen dem Datenverarbeitungssystem und dem Konfigurationswerkzeug angeordneten Zwischenspeicher oder mittels einer manuellen Eingabe zugeführt. Das Konfigurationswerkzeug ist beispielsweise eine Konfigurationssoftware oder ein eine Konfigurationssoftware enthaltendes Werkzeug wie ein so genanntes Engineeringsystem.

Dadurch wird vorteilhaft ein zur Konfiguration des Automatisierungsgerätes eingesetztes Konfigurationswerkzeug auch zum Einbringen der Identifikationsnummer in das Automatisierungsgerät genutzt, so dass das Einbringen der Identifikationsnummer in das Automatisierungsgerät praktisch keinen Mehraufwand verursacht.

Darüber hinaus wird auch ein Ersatz und Austausch eines Automatisierungsgerätes im Falle eines Defekts oder Ausfalls vereinfacht, da die Einbringung einer Identifikationsnummer innerhalb eines sowieso notwendigen Engineering-Prozesses erfolgen kann.

Eine weitere Ausgestaltung der Erfindung sieht vor, dass die dem virtuellen Gerät zugeordnete Identifikationsnummer dem Automatisierungsgerät in geheimer Weise zugeführt wird.

Dadurch wird die Gefahr eines Missbrauchs des Automatisierungsgerätes oder einer Gefährdung eines Systems durch das Automatisierungsgerät reduziert.

Weitere Ausgestaltungen der Erfindung sehen vor, dass die Identifikationsnummer zur Identifizierung und/oder Authentifizierung und/oder Autorisierung des Automatisierungsgerätes gegenüber dem Datenverarbeitungssystem verwendet wird.

Dies ermöglicht vorteilhaft eine herstellerunabhängige Identifizierung, Authentifizierung und/oder Autorisierung von Automatisierungsgeräten gegenüber dem Datenverarbeitungssystem.

Eine weitere Ausgestaltung der Erfindung sieht vor, dass die Identifikationsnummer in Abhängigkeit von einer Einordnung des virtuellen Gerätes in dem Datenverarbeitungssystem erzeugt wird.

Dies erleichtert einerseits die Zuordnung des Automatisierungsgerätes zur Struktur des Datenverarbeitungssystems und ermöglicht andererseits die Erzeugung einer für das Datenverarbeitungssystem und die Einordnung des virtuellen Gerätes in das Datenverarbeitungssystem spezifische und dadurch eindeutige Identifikationsnummer.

Ein erfindungsgemäßes Datenverarbeitungssystem ist dazu ausgebildet, für ein mit ihm zu verknüpfendes Automatisierungsgerät ein virtuelles Gerät anzulegen, für das virtuelle Gerät eine Identifikationsnummer in dem Datenverarbeitungssystem zu erzeugen und die Identifikationsnummer zur Interaktion mit dem Automatisierungsgerät zu verwenden. Das Datenverarbeitungssystem ist ferner dazu ausgebildet, die dem virtuellen Gerät zugeordnete Identifikationsnummer einem zur Konfiguration des Automatisierungsgerätes ausgebildeten Konfigurationswerkzeug zuzuführen.

Ein derartiges Datenverarbeitungssystem ermöglicht die Durchführung des erfindungsgemäßen Verfahrens mit den oben genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit einer Zeichnung näher erläutert werden.

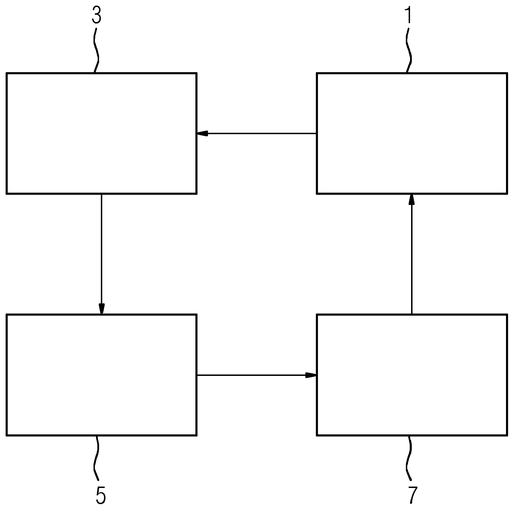

Dabei zeigt die einzige Figur ein Blockdiagramm eines Datenverarbeitungssystems 1, einer Netzwerkschnittstelle 3, eines Konfigurationswerkzeugs 5 und eines Automatisierungsgerätes 7.

Das Konfigurationswerkzeug 5 ist zur Konfiguration des Automatisierungsgerätes 7 ausgebildet. Zur Konfiguration des Automatisierungsgerätes 7 wird mittels des Konfigurationswerkzeugs 5 ein Konfigurationsdatensatz auf das Automatisierungsgerät 7 geladen, der in dem Automatisierungsgerät 7 gespeichert wird.

Die Netzwerkschnittstelle 3 ist beispielsweise eine Webschnittstelle zum Empfang von Daten aus dem Internet.

Um das Automatisierungsgerät 7 mit dem Datenverarbeitungssystem 1 zu verknüpfen, wird in dem Datenverarbeitungssystem 1 für das Automatisierungsgerät 7 ein virtuelles Gerät angelegt und für das virtuelle Gerät wird eine eindeutige Identifikationsnummer in dem Datenverarbeitungssystem 1 erzeugt, die von der Einordnung des virtuellen Gerätes in der Struktur des Datenverarbeitungssystems 1 abhängt.

Die dem virtuellen Gerät zugeordnete Identifikationsnummer wird dem Konfigurationswerkzeug 5 auf geheime Weise, beispielsweise verschlüsselt, über die Netzwerkschnittstelle 3 zugeführt. Statt über eine Netzwerkschnittstelle 3 kann die dem virtuellen Gerät zugeordnete Identifikationsnummer dem Konfigurationswerkzeug 5 auch auf andere Weise, beispielsweise mittels eines Speichermediums oder über einen zwischen dem Datenverarbeitungssystem 1 und dem Konfigurationswerkzeug 5 angeordneten Zwischenspeicher oder mittels einer manuellen Eingabe zugeführt werden.

Die Identifikationsnummer wird von dem Konfigurationswerkzeug 5 dem auf das Automatisierungsgerät 7 zu ladenden Konfigurationsdatensatz zugeordnet, auf das Automatisierungsgerät 7 geladen und in dem Automatisierungsgerät 7 gespeichert.

Die Identifikationsnummer wird verwendet, um das Automatisierungsgerät 7 gegenüber dem Datenverarbeitungssystem 1 zu identifizieren, authentifizieren, autorisieren und einer Struktur innerhalb des Datenverarbeitungssystems 1 zuzuordnen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Verknüpfung eines Automatisierungsgerätes (7) mit einem Datenverarbeitungssystem (1), wobei
- in dem Datenverarbeitungssystem (1) für das Automatisierungsgerät (7) ein virtuelles Gerät angelegt wird,
- für das virtuelle Gerät eine Identifikationsnummer in dem Datenverarbeitungssystem (1) erzeugt wird,
- die dem virtuellen Gerät zugeordnete Identifikationsnummer dem Automatisierungsgerät (7) zugeführt und in dem Automatisierungsgerät (7) gespeichert wird,
- und die Identifikationsnummer zur Interaktion des Automatisierungsgerätes (7) mit dem Datenverarbeitungssystem (1) verwendet wird,
wobei
die dem virtuellen Gerät zugeordnete Identifikationsnummer dem Automatisierungsgerät (7) mittels eines zur Konfiguration des Automatisierungsgerätes (7) ausgebildeten Konfigurationswerkzeugs (5) zugeführt wird, wobei die für das virtuelle Gerät erzeugte Identifikationsnummer von dem Konfigurationswerkzeug (5) gespeichert und auf das Automatisierungsgerät (7) übertragen wird, **dadurch gekennzeichnet, dass**
die Identifikationsnummer von dem Konfigurationswerkzeug (5) einem auf das Automatisierungsgerät (7) zu ladenden Konfigurationsdatensatz zugeordnet wird, auf das Automatisierungsgerät (7) geladen und in dem Automatisierungsgerät (7) gespeichert wird,
und wobei zur Konfiguration des Automatisierungsgerätes (7) mittels des Konfigurationswerkzeugs (5) der Konfigurationsdatensatz auf das Automatisierungsgerät (7) geladen wird, und in dem Automatisierungsgerät (7) gespeichert wird.

2. Verfahren nach Anspruch 1,
**dadurch gekennzeichnet, dass** dem Konfigurationswerkzeug (5) die dem virtuellen Gerät zugeordnete Identifikationsnummer über eine Netzwerkschnittstelle (3) oder mittels eines Speichermediums oder über einen zwischen dem Datenverarbeitungssystem (1) und dem Konfigurationswerkzeug (5) angeordneten Zwischenspeicher oder mittels einer manuellen Eingabe zugeführt wird.

3. Verfahren nach einem der vorhergehenden Ansprüche, **dadurch gekennzeichnet, dass** die dem virtuellen Gerät zugeordnete Identifikationsnummer dem Automatisierungsgerät (7) in geheimer Weise zugeführt wird.

4. Verfahren nach einem der vorhergehenden Ansprüche, **dadurch gekennzeichnet, dass** die Identifikationsnummer zur Identifizierung des Automatisierungsgerätes (7) gegenüber dem Datenverarbeitungssystem (1) verwendet wird.

5. Verfahren nach einem der vorhergehenden Ansprüche, **dadurch gekennzeichnet, dass** die Identifikationsnummer zur Authentifizierung des Automatisierungsgerätes (7) gegenüber dem Datenverarbeitungssystem (1) verwendet wird.

6. Verfahren nach einem der vorhergehenden Ansprüche, **dadurch gekennzeichnet, dass** die Identifikationsnummer zur Autorisierung des Automatisierungsgerätes (7) gegenüber dem Datenverarbeitungssystem (1) verwendet wird.

7. Verfahren nach einem der vorhergehenden Ansprüche, **dadurch gekennzeichnet, dass** die Identifikationsnummer in Abhängigkeit von einer Einordnung des virtuellen Gerätes in dem Datenverarbeitungssystem (1) erzeugt wird.

8. Datenverarbeitungssystem (1) zur Durchführung des Verfahrens nach einem der vorhergehenden Ansprüche, wobei das Datenverarbeitungssystem (1) dazu ausgebildet ist,
- für ein mit ihm zu verknüpfendes Automatisierungsgerät (7) ein virtuelles Gerät anzulegen,
- für das virtuelle Gerät eine Identifikationsnummer in dem Datenverarbeitungssystem (1) zu erzeugen
- und die Identifikationsnummer zur Interaktion mit dem Automatisierungsgerät (7) zu verwenden,
wobei das Datenverarbeitungssystem (1) dazu ausgebildet ist, die dem virtuellen Gerät zugeordnete Identifikationsnummer einem zur Konfiguration des Automatisierungsgerätes (7) ausgebildeten Konfigurationswerkzeug (5) zuzuführen,
wobei das Konfigurationswerkzeug dazu ausgebildet ist,
- die dem virtuellen Gerät zugeordnete Identifikationsnummer dem Automatisierungsgerät (7) zuzuführen, wobei die für das virtuelle Gerät erzeugte Identifikationsnummer von dem Konfigurationswerkzeug (5) gespeichert und auf das Automatisierungsgerät (7) übertragen wird, **dadurch gekennzeichnet, dass** das Konfigurationswerkzeug weiterhin ausgebildet ist,
- die Identifikationsnummer einem auf das Automatisierungsgerät (7) zu ladenden Konfigurationsdatensatz zuzuordnen, auf das Automatisierungsgerät (7) zu laden und in dem Automatisierungsgerät (7) zu speichern,
- zur Konfiguration des Automatisierungsgerätes (7) den Konfigurationsdatensatz auf das Automatisierungsgerät (7) zu laden, und in dem Automatisierungsgerät (7) zu speichern.

## Claims

1. Method for linking an automation device (7) to a data processing system (1), wherein
- a virtual device is created in the data processing system (1) for the automation device (7),
- an identification number is generated in the data processing system (1) for the virtual device,
- the identification number assigned to the virtual device is passed to the automation device (7) and is stored in the automation device (7),
- and the identification number is used for the interaction of the automation device (7) with the data processing system (1),
wherein the identification number assigned to the virtual device is passed to the automation device (7) by means of a configuration tool (5) designed to configure the automation device (7), wherein the identification number generated for the virtual device is stored by the configuration tool (5) and is transmitted to the automation device (7), **characterised in that**
the identification number is assigned by the configuration tool (5) to a configuration dataset to be loaded onto the automation device (7), is loaded onto the automation device (7) and is stored in the automation device (7),
and wherein, for the configuration of the automation device (7) by means of the configuration tool (5), the configuration dataset is loaded onto the automation device (7) and is stored in the automation device (7).

2. Method according to claim 1,
**characterised in that** the identification number assigned to the virtual device is passed to the configuration tool (5) via a network interface (3) or by means of a storage medium or via a buffer store arranged between the data processing system (1) and the configuration tool (5) or by means of a manual input.

3. Method according to one of the preceding claims, **characterised in that** the identification number assigned to the virtual device is passed secretly to the automation device (7) .

4. Method according to one of the preceding claims, **characterised in that** the identification number is used for identifying the automation device (7) in respect of the data processing system (1).

5. Method according to one of the preceding claims, **characterised in that** the identification number is used for authenticating the automation device (7) in respect of the data processing system (1).

6. Method according to one of the preceding claims, **characterised in that** the identification number is used for authorising the automation device (7) in respect of the data processing system (1).

7. Method according to one of the preceding claims, **characterised in that** the identification number is generated as a function of a classification of the virtual device in the data processing system (1).

8. Data processing system (1) for performing the method according to one of the preceding claims, wherein the data processing system (1) is designed
- to create a virtual device for an automation device (7) to be linked thereto,
- to generate an identification number in the data processing system (1) for the virtual device,
- and to use the identification number for the interaction with the automation device (7),
wherein the data processing system (1) is designed to pass the identification number assigned to the virtual device to a configuration tool (5) designed to configure the automation device (7),
wherein the configuration tool is designed
- to pass the identification number assigned to the virtual device to the automation device (7), wherein the identification number generated for the virtual device is stored by the configuration tool (5) and is transmitted to the automation device (7), **characterised in that** the configuration tool is furthermore designed
- to assign the identification number to a configuration dataset to be loaded onto the automation device (7), load it onto the automation device (7) and store it in the automation device (7),
- for the configuration of the automation device (7), to load the configuration dataset onto the automation device (7) and store it in the automation device (7).

## Revendications

1. Procédé de connexion d'un appareil (7) d'automatisation à un système (1) de traitement de données, dans lequel
- dans le système (1) de traitement de données, on met pour l'appareil (7) d'automatisation un appareil virtuel,
- on produit pour l'appareil virtuel un numéro d'identification dans le système (1) de traitement de données,
- on envoie à l'appareil (7) d'automatisation le numéro d'identification affecté à l'appareil virtuel et on le met en mémoire dans l'appareil d'automatisation,
- et on utilise le numéro d'identification pour l'interaction de l'appareil (7) d'automatisation avec le système (1) de traitement de données,
dans lequel
on envoie le numéro d'identification affecté à l'appareil virtuel à l'appareil (7) d'automatisation au moyen d'un outil (5) de configuration constitué pour la configuration de l'appareil (7) d'automatisation, dans lequel on met en mémoire par l'outil (5) de configuration le numéro d'identification produit pour l'appareil virtuel et on le transmet à l'appareil (7) d'automatisation, **caractérisé en ce que**
on affecte le numéro d'identification par l'outil (5) de configuration à un ensemble de données de configuration à charger sur l'appareil (7) d'automatisation, on le charge sur l'appareil (7) d'automatisation et on le met en mémoire dans l'appareil (7) d'automatisation,
et dans lequel pour la configuration de l'appareil (7) d'automatisation, on charge au moyen de l'outil (5) de configuration l'ensemble de données de configuration sur l'appareil (7) d'automatisation et on le met en mémoire dans l'appareil (7) d'automatisation.

2. Procédé suivant la revendication 1,
**caractérisé en ce que** l'on envoie à l'outil (5) de configuration le numéro d'identification affecté à l'appareil virtuel par une interface (3) de réseau ou au moyen d'un support de mémoire ou par une mémoire intermédiaire disposée entre le système (1) de traitement de données et l'outil (5) de configuration ou au moyen d'une entrée manuelle.

3. Procédé suivant l'une des revendications précédentes, **caractérisé en ce que** l'on envoie en secret à l'appareil (7) d'automatisation le numéro d'identification affecté à l'appareil virtuel.

4. Procédé suivant l'une des revendications précédentes, **caractérisé en ce que** l'on utilise le numéro d'identification pour l'identification de l'appareil (7) d'automatisation par rapport au système (1) de traitement de données.

5. Procédé suivant l'une des revendications précédentes, **caractérisé en ce que** l'on utilise le numéro d'identification pour l'authentification de l'appareil (7) d'automatisation par rapport au système (1) de traitement de données.

6. Procédé suivant l'une des revendications précédentes, **caractérisé en ce que** l'on utilise le numéro d'identification pour l'autorisation de l'appareil (7) d'automatisation par rapport au système (1) de traitement de données.

7. Procédé suivant l'une des revendications précédentes, **caractérisé en ce que** l'on produit le numéro d'identification en fonction d'un classement de l'appareil virtuel dans le système (1) de traitement de données.

8. Système (1) de traitement de données pour effectuer le procédé suivant l'une des revendications précédentes, dans lequel le système (1) de traitement de données est constitué,
- pour mettre un appareil virtuel sur un appareil (7) d'automatisation à lui connecter,
- pour produire pour l'appareil virtuel un numéro d'identification dans le système (1) de traitement de données,
- et pour utiliser le numéro d'identification pour l'interaction avec l'appareil (7) d'automatisation,
- dans lequel le système (1) de traitement de données est constitué pour envoyer le numéro d'identification affecté à l'appareil virtuel à un outil (5) de configuration constitué pour la configuration de l'appareil (7) d'automatisation,
- dans lequel l'outil de configuration est constitué,
- pour envoyer à l'appareil (7) d'automatisation le numéro d'identification affecté à l'appareil virtuel, le numéro d'identification produit pour l'appareil virtuel étant mis en mémoire par l'outil (5) de configuration et étant transmis à l'appareil (7) d'automatisation, **caractérisé en ce que** l'outil de configuration est constitué en outre
- pour associer le numéro d'identification à un ensemble de données de configuration à charger sur l'appareil (7) d'automatisation, le charger sur l'appareil (7) d'automatisation et le mettre en mémoire dans l'appareil (7) d'automatisation,
- pour charger pour la configuration de l'appareil (7) d'automatisation l'ensemble de données de configuration sur l'appareil (7) d'automatisation et le mettre en mémoire dans l'appareil (7) d'automatisation.
